# FASCICULE DE BREVET EUROPEEN

(11) **EP 4 296 162 B1**
(45) Date de publication et mention de la délivrance du brevet: **16.07.2025**
(21) Numéro de dépôt: 23170245.7
(22) Date de dépôt: 27.04.2023
(51) Int. Cl.: B64D 1/02, B64D 3/02

(54) **DISPOSITIF DE PROTECTION D'UN HÉLICOPTÈRE EMBARQUANT UN TREUIL, TREUIL MUNI D'UN TEL DISPOSITIF ET HÉLICOPTÈRE EMBARQUANT UN TEL TREUIL**
SCHUTZVORRICHTUNG EINES HUBSCHRAUBERS, DER EINE WINDE UMFASST, WINDE MIT EINER SOLCHEN VORRICHTUNG UND HUBSCHRAUBER, DER EINE SOLCHE WINDE UMFASST
DEVICE FOR PROTECTING A HELICOPTER HAVING A WINCH ON BOARD, WINCH PROVIDED WITH SUCH A DEVICE AND HELICOPTER HAVING SUCH A WINCH ON BOARD

(30) Priorité: 23.06.2022 FR 2206224
(43) Date de publication de la demande: 27.12.2023
(73) Titulaire: REEL, 69450 Saint-Cyr au Mont d'Or (FR)
(72) Inventeur: FIGOUREUX, David, 13300 SALON DE PROVENCE (FR); CAUQUELIN, Adrien, 69009 LYON (FR); DECREUSEFOND, Sébastien, 13330 PELISSANNE (FR)
(74) Mandataire: Ipsilon Lyon

(56) Documents cités:
- WO-A1-00/76845
- US-A1- 2019 263 642

## Description

### DOMAINE DE L'INVENTION

L'invention a trait au domaine des dispositifs de levage, plus particulièrement embarqués sur des aéronefs notamment des hélicoptères. Outre les aspects de sauvetage d'individus grâce à des hélicoptères munis d'un treuil, l'invention vise également le transport de personnes ou de charges, toujours par le biais d'hélicoptères, notamment dans des lieux difficiles d'accès par d'autres moyens (éoliennes, navires à l'approche des ports, ...).

### ETAT ANTERIEUR DE LA TECHNIQUE

La mise en œuvre de treuils embarqués au sein d'aéronefs, et plus spécifiquement d'hélicoptères, est aujourd'hui largement répandue. Typiquement, un treuil est monté au sein de l'hélicoptère, et le câble dudit treuil, est déroulé au gré des besoins. WO 00/76845 A1 et US 2019/263642 A1 divulguent des hélicoptères embarquant un treuil.

Si de tels treuils embarqués, notamment au sein d'hélicoptères, ont largement montré leur efficacité, il existe cependant des situations où leur usage peut s'avérer dangereux, notamment pour l'hélicoptère et par voie de conséquence pour ses occupants.

Règlementairement, le treuil doit être muni de moyens aptes à sectionner ledit câble au niveau du treuil ou de la cabine lorsque, en présence de conditions critiques, telles qu'une panne moteur de l'hélicoptère pendant une opération de treuillage par exemple, l'équipage a besoin, pour la sécurité de l'hélicoptère, de sectionner ledit câble.

Il arrive également que pendant un treuillage, le câble vienne à se coincer dans un obstacle (pylône, arbre, etc...) nécessitant l'actionnement par l'équipage desdits moyens de sectionnement.

Cependant, dans certains cas de coincement, en cas de surtension brutale ou de surtension associée à un endommagement localisé du câble dû à une arête vive par exemple, le câble vienne à se rompre avant que l'équipage n'ait pu réagir. Dans ce cas le câble est sectionné à une distance non négligeable de l'hélicoptère.

Lors de telles occurrences, on observe, en raison de la tension exercée sur le câble par la charge qu'il porte ou par l'hélicoptère, un effet élastique tendant à faire remonter brutalement l'extrémité sectionnée du câble et le câble lui-même en direction de l'hélicoptère. Ce faisant, le câble est susceptible d'atteindre les pales de l'hélicoptère, et peut donc engendrer des effets pouvant entraîner la chute de l'hélicoptère, avec les conséquences catastrophiques qui en découlent en termes de sécurité des occupants de l'hélicoptère, outre le cas échéant du lieu de chute dudit hélicoptère.

Afin de pallier cet inconvénient rédhibitoire, il est possible de mettre en œuvre des câbles surdimensionnés par rapport à la charge qu'ils sont appelés à soulever, afin d'augmenter leur masse et, par voie de conséquence, limiter la remontée du câble sous l'effet élastique inhérent à la tension à laquelle ils sont soumis. Ce faisant, on évite le risque de voir l'extrémité du câble remonter au-dessus du niveau du treuil. Cependant, la mise en œuvre de tels câbles plus lourds engendre la nécessité d'un treuil plus puissant et également plus lourd, ce que justement les concepteurs de tels treuils cherchent à éviter.

L'objet de l'invention est de surmonter ces différents inconvénients en proposant un dispositif simple à mettre en œuvre et répondant aux exigences de sécurité.

### EXPOSE DE L'INVENTION

A cet effet, l'invention vise un dispositif de protection d'un hélicoptère embarquant un treuil contre les conséquences d'une rupture brutale du câble dudit treuil, que ladite rupture soit fortuite ou voulue, ledit treuil étant muni d'un orifice de sortie du câble.

Selon l'invention, ce dispositif comprend un écran permanent fixé au voisinage de l'orifice de sortie du câble ou déployable au voisinage de l'orifice de sortie du câble. Cet écran est avantageusement orienté sensiblement perpendiculairement par rapport à la direction dudit orifice de sortie ; il a vocation à étendre la surface de protection de l'hélicoptère résultant du treuil proprement dit, et notamment du capot de protection dont ledit treuil est muni, d'une distance au moins égale à 20 centimètres mesurée à partir dudit orifice de sortie.

En d'autres termes, l'invention consiste à munir le treuil d'un écran ou bouclier, apte à recevoir le brin de câble dans l'hypothèse d'un retour élastique de celui-ci en suite d'une rupture brutale, et apte à s'opposer au dépassement dudit brin de câble au-delà dudit treuil, et notamment au-delà du capot de protection du treuil, et ainsi l'empêcher de venir s'enrouler et, de manière générale, interférer avec les pales de l'hélicoptère.

L'expérience démontre qu'avec un écran ou bouclier s'étendant typiquement avec un minimum de 20 centimètres, et avantageusement entre 20 et 50 centimètres au-delà de l'orifice de sortie du câble hors du treuil, on évite tout risque de dépassement du brin de câble au-delà du treuil, et donc en direction des pales, conférant ainsi la sécurité à l'hélicoptère muni du treuil en question.

Selon un premier mode de réalisation, cet écran est rigide et fixé à demeure au voisinage de l'orifice de sortie du câble. Cet écran peut ainsi être constitué d'une tôle métallique de rigidité suffisante pour absorber le choc inhérent à la remontée brutale de l'extrémité du câble en cas de rupture. Il peut également être réalisé en une plaque en matériau composite, voire en matière plastique, également rigide.

Selon un autre mode de réalisation, l'écran est constitué d'un filet ou grille ajourée, solidarisée au voisinage de l'orifice de sortie du treuil au moyen d'une tige rigide ou équivalent. Ce faisant, on altère de manière moins importante la portance de l'hélicoptère en raison de la nature ajourée du filet ou de la grille.

Selon encore un autre mode de réalisation, l'écran est déployable au voisinage de l'orifice de sortie du câble hors du treuil, à l'instar d'un airbag.

L'invention concerne également un hélicoptère muni d'un treuil embarqué, dans lequel le treuil est monté sur une potence rotative pour permettre le fonctionnement du treuil en opération, le treuil en question étant muni du dispositif précité.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une vue schématique d'un hélicoptère muni d'un treuil.
La figure 2 illustre schématiquement un treuil muni de son capotage.
La figure 3 illustre le treuil de la figure 2 muni du dispositif selon un premier mode de réalisation de l'invention.
La figure 4 est une vue latérale du treuil de la figure 3.
La figure 5 illustre le treuil de la figure 2 muni du dispositif selon un second mode de réalisation de l'invention.
La figure 6 est une vue latérale du treuil de la figure 5.
La figure 7 illustre le treuil de la figure 2 muni du dispositif selon un troisième mode de réalisation de l'invention.

### DESCRIPTION DETAILLEE DE L'INVENTION

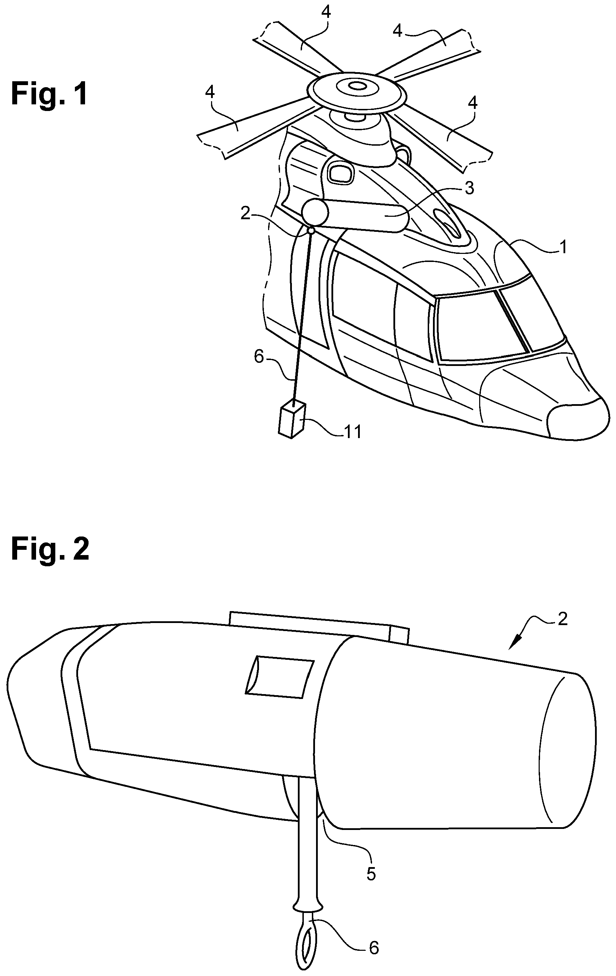

On a illustré, en relation avec la figure 1, un hélicoptère (1) muni de ses pales (4). Cet hélicoptère comprend un treuil (2) monté sur une potence amovible (3). La potence est destinée à permettre la sortie du treuil hors de la cabine de l'hélicoptère, afin de permettre son fonctionnement en mode opérationnel. Une telle potence qui peut être également fixe, est connue en soi, de sorte qu'il n'y a pas lieu de la décrire plus en détail.

Selon l'invention, le treuil est typiquement constitué d'un tambour de stockage et/ou de levage, voire d'un cabestan associé à un tambour de stockage. Il est actionné au moyen d'un ou de plusieurs moteurs électriques, selon que ledit treuil comporte limitativement un tambour de stockage et de levage ou un tambour de stockage et un cabestan, la force de traction étant alors assurée par le cabestan proprement dit. Les avantages d'un tel treuil à cabestan sont également largement connus, de sorte qu'il n'y a pas lieu de le décrire ici en détail.

Que ledit treuil comporte un simple tambour de stockage et/ou un tambour de stockage et de levage, il comporte un orifice de sortie (5) du câble (6), à l'extrémité duquel une charge ou un individu (11) a vocation à être levé.

Selon une caractéristique de l'invention, est positionné au voisinage de cet orifice de sortie (5) du câble (6), et plus particulièrement légèrement au-dessus de cet orifice, et selon un premier mode de réalisation de l'invention, une tôle (7), solidarisée par tous moyens au dit treuil, ce dernier étant muni de capabilités, de type orifices taraudés aptes à permettre la fixation par vissage de la tôle.

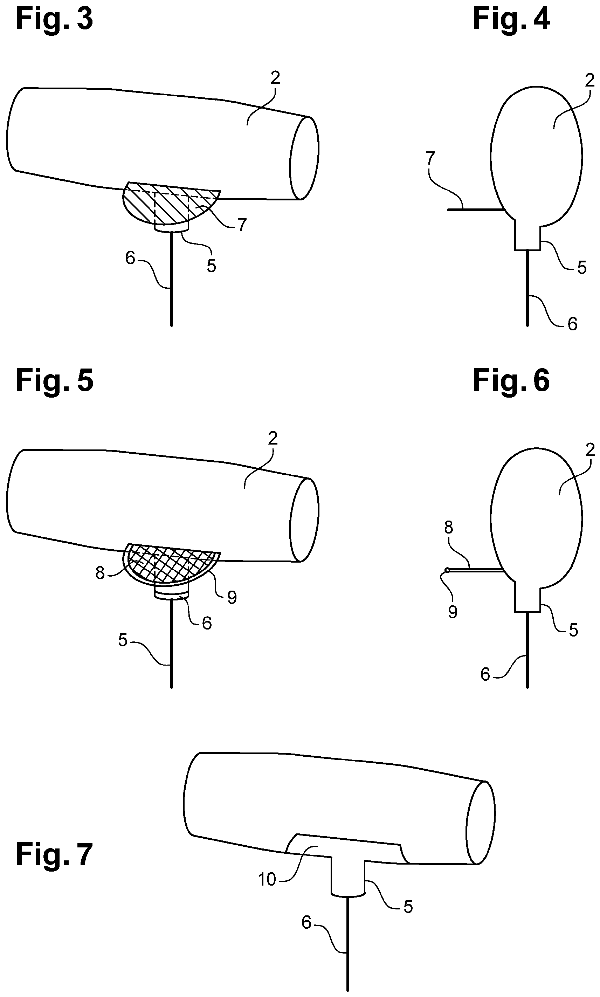

En l'espèce, cette tôle métallique (7) s'étend sensiblement perpendiculairement à la direction principale de l'orifice de sortie (5) du treuil (6), sur une distance au moins égale à 20 centimètres, et avantageusement comprise entre 20 et 50 centimètres par rapport audit orifice de sortie du câble. Dans l'exemple décrit, ledit orifice de sortie (5) du câble n'étant pas centré par rapport au volume globalement cylindrique du treuil, mais décalé, ainsi qu'on peut l'observer sur les figures 4 et 6, la tôle (7) ne s'étend qu'en direction de la gauche sur lesdites figures, le capot du treuil assurant la fonction d'arrêt de l'extrémité dudit câble de l'autre côté.

Cette tôle est relativement rigide pour permettre d'arrêter le câble en cas de rupture brutale de ce dernier et de sa remontée par effet élastique en direction de l'hélicoptère, et de résister aux vibrations tout en offrant une résistance à l'air minimum tant dans le sens de l'avancement de l'hélicoptère ou dans le sens vertical pour minimiser la perte de portance générée par le rotor (les pâles 4).

Ainsi qu'on peut l'observer sur les figures, cette tôle (7) est fixée à la périphérie, voire légèrement au-dessus de l'orifice de sortie (5) afin de ne pas gêner la montée et la descente du câble au travers dudit l'orifice (5).

Cette tôle (7) peut être remplacée par une plaque en matière plastique rigide.

Alternativement, et comme illustré sur les figures 5 et 6, cette tôle (7) peut être remplacée par une surface ajourée (8), typiquement constituée d'un filet ou d'une grille métallique, maintenue selon le plan dans lequel s'étend ce dispositif de protection par une poutre ou une tige rigide (9) émanant du treuil. Cette forme de réalisation présente l'avantage de diminuer l'altération de la portance résultant dudit dispositif.

Selon encore un autre mode de réalisation de l'invention, ce dispositif de protection n'est déployé que lorsqu'une rupture brutale du câble (6) est détectée. Cette détection peut, par exemple, être mesurée par la détermination instantanée de la valeur du couple qui s'exerce sur le tambour de levage ou le cabestan entrant dans la constitution du treuil.

Selon ce mode de réalisation, le dispositif de protection est, en mode de fonctionnement normal, escamoté à l'intérieur du treuil dans un logement ménagé à cet effet, et protégé par un capot (10) de dimensions appropriées, et se déploie extrêmement rapidement par le biais de moyens pyrotechniques par exemple, à l'instar d'un airbag, dès détection d'une rupture brutale du câble (6).

Dans cette configuration, un boudin gonflable se déploie, selon un plan analogue à celui dans lequel s'inscrit la tôle (7) du premier mode de réalisation décrit, un filet se tendant concomitamment dans l'intérieur de la surface définie alors par ledit boudin.

De par la mise en œuvre d'un tel dispositif de protection, le Demandeur a pu observer que, quelle que soit la tension exercée sur le câble au moment de sa rupture brutale, susceptible d'engendrer une remontée brutale de celui-ci, ledit câble vient frapper la face inférieure du dispositif, sans dépasser le plan dans lequel ce dernier s'inscrit, et donc sans risque de voir le câble ainsi rompu venir se prendre dans les pales de l'hélicoptère.

On conçoit tout l'intérêt de la présente invention qui, à l'aide d'un dispositif simple à mettre en œuvre, permet de pallier tout risque de prise du câble dans les pales de l'hélicoptère et partant, d'optimiser la sécurité de ce dernier et de ses occupants

## Revendications

1. Dispositif de protection d'un hélicoptère (1) embarquant un treuil (2) muni d'un câble de levage (6) contre les conséquences d'une rupture brutale dudit câble, le treuil étant muni d'un orifice de sortie (5) du câble (6), ***caractérisé* en ce que** ledit dispositif est constitué par un écran (7, 8, 9) positionné au voisinage de l'orifice de sortie (5) du câble (6) ou déployable au voisinage de l'orifice de sortie (5) du câble (6), ledit écran étant orienté sensiblement perpendiculairement par rapport à la direction dudit orifice de sortie et s'étendant sur une distance d'au moins 20 centimètres par rapport audit orifice de sortie.

2. Dispositif de protection d'un hélicoptère selon la revendication *1,* ***caractérisé* en ce que** l'écran s'étend sur une distance comprise entre 20 et 50 centimètres par rapport à l'orifice de sortie (5) du câble hors du treuil.

3. Dispositif de protection d'un hélicoptère selon l'une des revendications 1 et 2, ***caractérisé* en ce que** l'écran est constitué d'une tôle métallique de rigidité suffisante pour absorber le choc inhérent à la remontée brutale de l'extrémité du câble en cas de rupture.

4. Dispositif de protection d'un hélicoptère selon l'une des revendications 1 et 2, ***caractérisé* en ce que** l'écran est constitué d'une plaque réalisée en matière plastique rigide.

5. Dispositif de protection d'un hélicoptère selon l'une des revendications 1 et 2, ***caractérisé* en ce que** l'écran est constitué d'un filet ou grille ajourée, solidarisée au voisinage de l'orifice de sortie du treuil au moyen d'une tige rigide ou équivalent.

6. Dispositif de protection d'un hélicoptère selon l'une des revendications 1 et 2, ***caractérisé* en ce que** l'écran est constitué d'un boudin gonflable associé à un filet, l'ensemble ainsi défini étant reçu dans un logement dédié au sein du treuil, et n'étant déployé sous l'action de moyens pyrotechniques que lorsqu'une rupture brutale du câble (6) est détectée, le boudin gonflable définissant alors une surface orientée sensiblement perpendiculairement par rapport à la direction dudit orifice de sortie et au sein de laquelle un filet est tendu concomitamment avec le déploiement dudit boudin.

7. Treuil de levage muni d'un tambour de levage ou d'un cabestan sur lequel vient s'enrouler un câble (6) à l'extrémité duquel est fixée une charge (11), et intégrant un moteur apte à assurer la rotation du tambour de levage ou du cabestan, muni d'un dispositif de protection selon l'une des revendications 1 à 6.

8. Treuil selon la revendication 7, comprenant un détecteur de la rupture brutale du câble (6).

9. Treuil selon la revendication 8, dans lequel le détecteur de la rupture brutale du câble est constitué par un capteur du couple exercé par le câble (6) sur le tambour de levage ou sur le cabestan.

10. Hélicoptère muni d'un treuil selon l'une des revendications 7 à 9.

## Patentansprüche

1. Schutzvorrichtung für einen Hubschrauber (1), der eine Seilwinde (2) an Bord hat, die mit einem Hebeseil (6) gegen die Folgen eines plötzlichen Seilbruchs versehen ist, wobei die Seilwinde eine Austrittsöffnung (5) für das Seil (6) hat, **dadurch *gekennzeichnet,* dass** die Vorrichtung aus einem Schutzschirm (7, 8, 9) besteht, der in der Nähe der Austrittsöffnung (5) des Seils (6) positioniert ist oder in der Nähe der Austrittsöffnung des Seils entfaltet werden kann, und der Schirm im Wesentlichen senkrecht zur Richtung der Austrittsöffnung ausgerichtet ist und sich über eine Strecke von mindestens 20 Zentimetern in Bezug auf die Austrittsöffnung erstreckt.

2. Schutzvorrichtung eines Hubschraubers nach Anspruch 1, **dadurch *gekennzeichnet,* dass** sich der Schutzschirm über eine Strecke zwischen 20 und 50 Zentimetern in Bezug auf die Austrittsöffnung (5) des Seils außerhalb der Seilwinde erstreckt.

3. Schutzvorrichtung für einen Hubschrauber nach einem der Ansprüche 1 und 2, **dadurch *gekennzeichnet,* dass** der Schutzschirm aus einem Metallblech mit ausreichender Steifigkeit besteht, um den Aufprall zu absorbieren, der durch das plötzliche Hochziehen des Seilendes im Falle eines Bruchs entsteht.

4. Schutzvorrichtung für einen Hubschrauber nach einem der Ansprüche 1 und 2, **dadurch *gekennzeichnet,* dass** der Schutzschirm aus einer Platte besteht, die aus einem steifen Kunststoffmaterial gefertigt ist.

5. Schutzvorrichtung für einen Hubschrauber nach einem der Ansprüche 1 und 2, **dadurch *gekennzeichnet,* dass** der Schutzschirm aus einem gelochten Netz oder Gitter besteht, das in der Nähe der Austrittsöffnung der Seilwinde mit Hilfe einer starren Stange oder Ähnlichem befestigt ist.

6. Schutzvorrichtung für einen Hubschrauber nach einem der Ansprüche 1 und 2, **dadurch *gekennzeichnet,* dass** der Schutzschirm aus einem aufblasbaren Wulst besteht, der mit einem Netz verbunden ist, wobei diese Baugruppe in einem speziellen Gehäuse in der Winde untergebracht ist und sich nur dann pyrotechnisch ausbreitet, wenn ein plötzlicher Bruch des Seils (6) erkannt wird, und der aufblasbare Wulst dann eine Fläche einnimmt, die im Wesentlichen senkrecht zur Richtung der Austrittsöffnung ausgerichtet ist und in der gleichzeitig mit der Ausbreitung des Wulsts ein Netz gespannt wird.

7. Seilwinde mit einer Hebetrommel oder einem Seilzug, auf der ein Seil (6) aufgewickelt ist, an dessen Ende eine Last (11) befestigt ist, und die mit einem Motor ausgestattet ist, der die Drehung der Hebetrommel oder der Spillwinde gewährleisten kann, die mit einer Schutzvorrichtung nach einem der Ansprüche 1 bis 6 ausgestattet ist.

8. Seilwinde nach Anspruch 7, die mit einem Detektor für den plötzlichen Bruch des Seils (6) ausgestattet ist.

9. Seilwinde nach Anspruch 8, bei welcher der Detektor eines plötzlichen Seilbruchs aus einem Sensor für das Drehmoment besteht, das vom Seil (6) auf die Hebetrommel oder die Spillwinde ausgeübt wird.

10. Hubschrauber, der mit einer Spillwinde nach einem der Ansprüche 7 bis 9 ausgestattet ist.

## Claims

1. A device for protecting a helicopter (1) provided with an on-board hoist (2) provided with a hoisting cable (6) against the consequences of an abrupt rupture of said cable, the hoist being provided with an outlet port (5) for the cable (6), ***wherein*** said device is formed by a shield (7, 8, 9) positioned in the vicinity of the outlet port (5) of the cable (6) or deployable in the vicinity of the outlet port (5) of the cable (6), said shield being oriented substantially perpendicularly with respect to the direction of said outlet port and extending over a distance of at least 20 centimeters with respect to said outlet port.

2. The device for protecting a helicopter according to claim *1, **wherein*** the shield extends over a distance in the range from 20 to 50 centimeters with respect to the port (5) for letting out the cable outside of the hoist.

3. The device for protecting a helicopter according to any of claims 1 and 2, ***wherein*** the shield is formed of a metal sheet having a stiffness sufficient to absorb the shock inherent to the abrupt rise of the end of the cable in case of a rupture.

4. The device for protecting a helicopter according to any of claims 1 and 2, ***wherein*** the shield is formed of a plate made of rigid plastic material.

5. The device for protecting a helicopter according to any of claims 1 and 2, ***wherein*** the shield is formed of a net or open-worked grid, rigidly attached in the vicinity of the outlet port of the hoist by means of a rigid rod or the like.

6. The device for protecting a helicopter according to any of claims 1 and 2, ***wherein*** the shield is formed of an inflatable bead associated with a net, the assembly thus defined being received in a dedicated housing within the hoist, and being only deployed under the action of pyrotechnic means when an abrupt rupture of the cable (6) is detected, the inflatable bead then defining a surface oriented substantially perpendicularly with respect to the direction of said outlet port and within which a net is stretched concurrently to the deployment of said bead.

7. A hoist provided with a hoisting drum or with a capstan on which is wound a cable (6) at the end of which is fastened a load (11), and integrating a motor capable of ensuring the rotation of the hoisting drum or of the capstan, provided with a protection device according to any of claims 1 to 6.

8. The hoist according to claim 7, comprising a detector of the abrupt rupture of the cable (6).

9. The hoist according to claim 8, wherein the detector of the abrupt rupture of the cable is formed by a sensor of the torque exerted by the cable (6) on the hoisting drum or on the capstan.

10. A helicopter provided with a hoist according to any of claims 7 to 9.
